Europäisches Patentamt

European Patent Office

Office européen des brevets

(19)

(11) Publication number: **0 124 322**
**B1**

(12) **EUROPEAN PATENT SPECIFICATION**

(45) Date of publication of patent specification: **08.07.87**

(51) Int. Cl.⁴: **F 16 G 5/16, F 16 H 9/24**

(21) Application number: **84302633.7**

(22) Date of filing: **18.04.84**

(54) **V-belt transmissions.**

(30) Priority: **23.04.83 JP 70920/83**

(43) Date of publication of application:
**07.11.84 Bulletin 84/45**

(45) Publication of the grant of the patent:
**08.07.87 Bulletin 87/28**

(84) Designated Contracting States:
**DE FR GB NL**

(56) References cited:
**EP-A-0 118 892**
**DE-A-2 505 228**
**JP-A-57 018 836**
**US-A-4 338 081**

**PATENTS ABSTRACTS OF JAPAN, vol. 5, no. 206 (M-104)(878), December 26, 1981;**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Hattori, Torao**
**1-13-28, Shirako**
**Wako-shi Saitama-ken (JP)**

(74) Representative: **MacFarlane, John Anthony Christopher et al**
**HASELTINE LAKE & CO. Hazlitt House 28, Southampton Buildings Chancery Lane London WC2A 1AT (GB)**

Courier Press, Leamington Spa, England.

# Description

This invention relates to V-belt transmissions as used for variable-speed transmissions in vehicles. The invention is particularly concerned with a V-belt transmission wherein an endless metallic belt is provided thereon with a large number of V-shaped metallic members, each having an outwardly directing engaging surface which is in abutment with the metallic belt.

In Patents Abstracts of Japan, Vol. 6, No. 80 (M-129) (958) May 19, 1982 (JP—A—57—18836) there is disclosed a V-belt transmission in which an endless metallic belt is provided thereon with a large number of V-shaped metallic members disposed in a line in the lengthwise direction of the metallic belt and each having an outwardly directed engaging surface which is in abutment with the metallic belt, the belt and the members forming, as a whole, a V-belt assembly that is applied between a driving V-pulley and a driven V-pulley so as to effect power transmission therebetween, there being a large number of intermediate members positioned inside the metallic belt interposed each between respective adjacent metallic members; a receiving surface receiving a corresponding intermediate member and being provided on a side surface in the lengthwise direction of the metallic belt of each of the metallic members.

These intermediate members are pieces of elastic materials which adsorb shock of collision between blocks upon bending of the belt.

In EP—A—0 118 892 published on September 19, 1984 there is disclosed a V-belt transmission in which an endless metallic belt is provided thereon with a large number of V-shaped metallic members disposed in a line in the lengthwise direction of the metallic belt and each having an outwardly directed engaging surface which is in abutment with the metallic belt, the belt and the members forming, as a whole, a V-belt assembly that is applied between a driving V-pulley and a driven V-pulley so as to effect power transmission therebetween, there being a large number of intermediate members positioned inside the metallic belt interposed each between respective adjacent metallic members; at least one of two receiving surfaces receiving a corresponding intermediate member, these receiving surfaces being on mutual opposite side surfaces in the lengthwise direction of the metallic belt of each of the metallic members, being of such a shape as to give a wedge effect for applying a pressing force, in the lengthwise direction of the metallic belt, to said corresponding intermediate member when each of the metallic members is brought into engagement with and pushed outwards by a V-groove of each of the V-pulleys. In this regard, particular reference is directed to the metallic member 2, its arc-shaped surfaces, the intermediate member 3, and the receiving surfaces (not referenced) for receiving a corresponding intermediate member 6 shown in Figure 16.

According to the present invention there is provided a V-belt transmission in which an endless metallic belt is provided thereon with a large number of V-shaped metallic members disposed in a line in the lengthwise direction of the metallic belt and each having an outwardly directed engaging surface which is in abutment with the metallic belt, the belt and the members forming, as a whole, a V-belt assembly that is applied between a driving V-pulley and a driven V-pulley so as to effect power transmission therebetween, there being a large number of intermediate members positioned inside the metallic belt interposed each between respective adjacent metallic members; at least one of two receiving surfaces receiving a corresponding intermediate member, these receiving surfaces being on mutual opposite side surfaces in the lengthwise direction of the metallic belt of each of the metallic members, being of such a shape as to give a wedge effect for applying a pressing force, in the lengthwise direction of the metallic belt, to said corresponding intermediate member when each of the metallic members is brought into engagement with and pushed outwards by a V-groove of each of the V-pulleys; characterised in that the engaging surface of each of the metallic members is positioned at the same level as a centre, in the height direction, of an inclined lateral side surface of each of the metallic members that is to be in contact with the V-groove.

In this transmission, during operation, the reaction force generated when each metallic member is pushed into each of the V-pulleys is applied to the metallic belt in such a condition that this force is distributed to the metallic member and the intermediate member, so that points of acting of the reaction forces on the metallic belt are increased in number, and the stress generated at each part of the metallic belt becomes smaller, and thereby the durability of the metallic belt is improved. Since the engaging surface of each of the metallic members is positioned at the same level as a centre, in the height direction, of an inclined lateral side surface of each of the metallic members that is to be in contact with the V-groove, a difference between a travelling speed of the inner surface of the metallic belt and that of each of the engaging surfaces of the respective metallic members is removed and accordingly wear between these components, caused by slippage, is minimised, enhancing durability and power transmission efficiency.

In addition, the invention provides that each of the metallic members is provided with a groove, which is open outwardly and has at its base the engaging surface, so that this member may be mounted, at its groove, on the metallic belt, and is additionally provided with a projection fast therewith that projects into a gap between adjacent ones of the metallic members as formed outside each of the intermediate members; and that each groove is provided at inner surfaces of groove wall portions on both sides thereof with engaging grooves disposed laterally outside an outer surface of the metallic belt, and a stop member is mounted in this groove in engagement with the engaging grooves, each stop member being resilient both in the groove width direction and in the groove opening direction so that respective stop members may be brought into abutment one with another for being kept in predetermined regular attaching positions. By these arrangements, the metallic members are mutually regulated in positions in the region of linear movement thereof, and assembling, and durability, of the V-belt assembly is improved.

For a better understanding of the invention and to show how the same may be carried into effect, reference will now be made, by way of example, to the accompanying drawings, in which:—

Figure 1 is a sectional side view of a V-belt transmission;

Figure 2 is a top plan view of the transmission of Figure 1,

Figures 3 and 4 are sectional views taken along the lines III—III and IV—IV respectively in Figure 1,

Figure 5 is a sectional side view of a detail of the transmission,

Figures 6 to 9 are sectional side views of details of other forms of transmission, and

Figures 10(a), 10(b) and 10(c) are diagrams explaining the operation of the transmission.

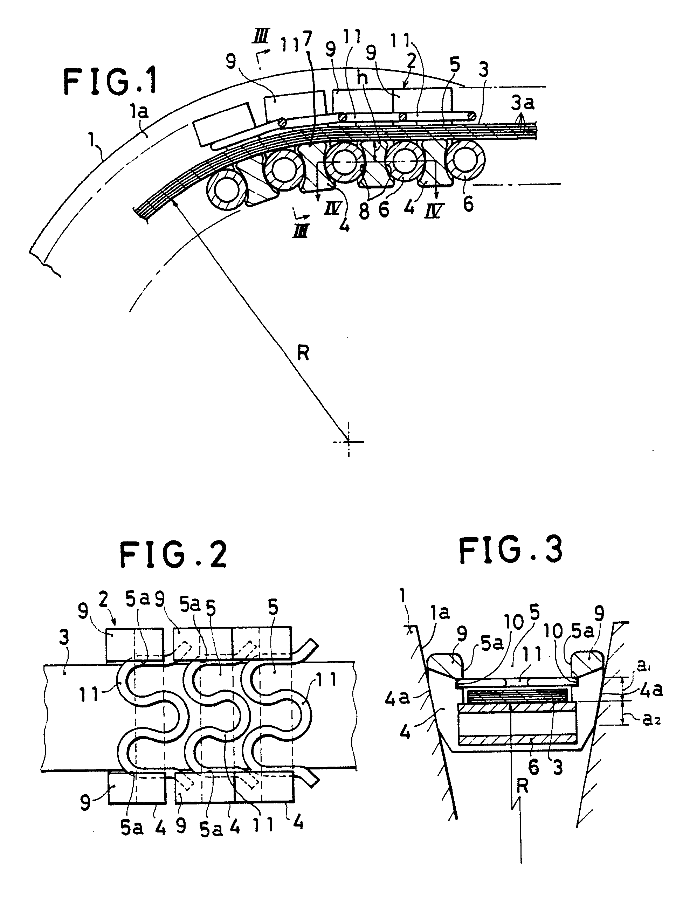

Referring first to Figures 1 to 3, numeral 1 denotes a variable driving V-pulley. A V-belt assembly 2 is applied between the V-pulley 1 and a variable driven V-pulley (not illustrated) for effecting power transmission between the two pulleys.

In the V-belt assembly 2 an endless metallic belt 3 comprises plural hoop-configuration belt members 3a, 3a, . . . put one upon another in layers. On this belt 3 there are mounted a large number of V-shaped metallic members, 4, 4, . . ., each of which has both inclined lateral side surfaces 4a, 4a adapted to be in contact with a V-groove 1a of the pulley 1, and each of which is provided with a groove 5 which is opened outwards (upwards in Figures 1 and 3). The metallic members 4, 4, . . . are so mounted on the metallic belt 3, at their respective grooves 5, 5, . . ., as to be disposed thereon in a line in the lengthwise direction of the endless metallic belt 3. A large number of intermediate members 6, 6, . . . are so interposed between respective adjacent metallic members 4, 4, . . . as to be positioned on the inside (on the lower side in Figures 1 and 3) of the metallic belt 3 and are fastened or bound together from the outer (relative to the assembly as a whole) periphery thereof with the metallic belt 3, in such a condition that the respective metallic members 4, 4, . . . are in abutment from inside with the metallic belt 3, at their respective outwardly (with respect to the assembly as a whole) directed engaging surfaces 7, 7, . . . which are the base portions of the respective grooves 5, 5, . . . .

Each of the metallic members 4, 4, . . . is provided, on both sides thereof in the lengthwise direction of the metallic belt 3, with receiving surfaces 8, 8 for receiving corresponding intermediate members 6, 6, and at least one of the receiving surfaces 8, 8 is of a shape such as to give a wedge effect for applying a pressing force, in the lengthwise direction of the metallic belt 3, to the corresponding one of the intermediate members 6, 6, . . ., by a reaction force acting on each of the metallic members 4, 4, . . . as generated in response to pushing thereof into the V-groove 1a of the V-pulley 1.

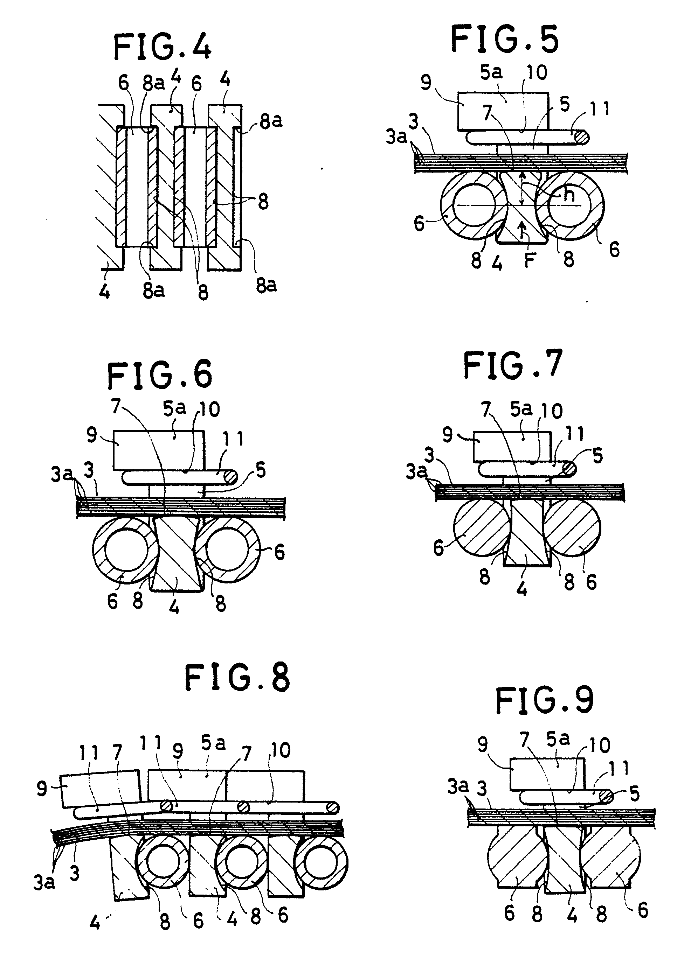

In order that relative tilting movements of the respective metallic members 4, 4, about the intermediate member 6 therebetween . . . may be smooth, it is preferable that each of the intermediate members 6, 6, . . . is such that at least a contact surface thereof which is to be in contact with each of the receiving surfaces 8, 8 is in the shape of an arc in section. Additionally, it is desirable that the intermediate members 6, 6, . . . are partly or wholly made of hollow resilient metallic members so that any change in torque may be absorbed by a resilient property thereof and thereby generation of a free gap caused by elongation of the belt may be prevented. For meeting this requirement, in the illustrated example, each of the intermediate members 6, 6, . . . is a hollow slender resilient metallic roller. Additionally, in the illustrated example, the receiving surfaces 8, 8 on both sides of each of the metallic members 4, 4, . . . are formed as such arc-shaped concave surfaces that the radius of each is about 1.5—2 times the radius of the contact surface each of the intermediate members 6, 6, . . ., as shown in Figure 5, so that the wedge effect mentioned above may be obtained by the curved surface of an inner part (lower part in the drawings) of each of the arc-shaped concave receiving surfaces 8, 8. However, there can be considered such a modification that each of the receiving surfaces 8, 8 is of a nearly V-shaped concave configuration as shown in Figure 6, for instance; or such a modification that, as shown in Figure 7, an outer (with respect to the assembly as a whole) part thereof (upper part in the Figures) of each of the receiving surfaces 8, 8 is an upright plane and only an inner (with respect to the assembly as a whole) portion thereof is an inclined surface which can exhibit the wedge effect. There can be also considered such a modification that, as shown in Figure 8, only the receiving surface 8 on one side is of such a shape as to exhibit the wedge effect.

If each of the receiving surfaces 8, 8 is a recessed surface having mutually opposite wall portions 8a, 8a which are in abutment with both end surfaces of each intermediate member 6, as shown in Figure 4, it is advantageous in that the respective metallic members 4, 4, . . . can be mutually regulated in position in lateral directions contoured and can be made smooth in their contact with the V-pulley 1. To this end, each outwardly directing engaging surface 7 is so contoured that the sectional form thereof taken along the lengthwise direction of the metallic belt 3 is a convex surface that has its radius of curvature substantially equal to the radius R (Figures 1 and 3) of a turning region of the innermost layer belt member 3a of the metallic belt 3 around the V-pulley 1 or such a convex surface as above that has at its middle part a small flat plane.

Additionally, the height h (Figure 1) of the engaging surface 7 measured from a centre position, in the height direction of the receiving surface 8, is equal to or somewhat larger than the radius of the intermediate member 6 so that the metallic belt 3 may be brought always into pressure contact with the engaging surface 7.

The engaging surface 7 is positioned at the same level as the centre, in the height direction, of the inclined lateral side surface 4a which is in contact with the V-groove 1a of the V-pulley 1. Namely, the height $a_1$ (Figure 3) of the engaging surface 7 measured from the inner (with respect to the assembly as a whole) edge (the lower edge in Figure 3) of the inclined lateral side surface 4a and the height $a_2$ of the outer (with respect to the assembly as a whole) edge (the upper edge in Figure 3) of the inclined surface 4a measured from the engaging surface 7 are made equal one to another. By this arrangement, the turning radius R, around the V-pulley 1, of the innermost layer belt member 3a of the metallic belt 3 which is in contact with the engaging surface 7, and the radius of the turning region of the centre of the inclined surface 4a, are made equal to one another, so that the travel speed of the belt member 3a and that of each of the metallic members 4, 4, ... at the time when the belt assembly is moved in its linear movement region are equal to one another, and consequently there is not caused slipping between the two thereby to avoid wearing of the two caused by such slipping. Thus the useful life of the belt assembly can be prolonged.

Still another feature is that each of the metallic members 4, 4, ... is provided with a projection 9 that is integral therewith and projects, for instance, from each of groove wall portions 5a, 5a on both sides of the groove 5 into a gap between adjacent ones of the metallic members 4, 4, .... By this arrangement, in the linear movement region of the belt assembly, the respective metallic members 4, 4, ... are mutually regulated in position by these projections 9, 9, ... and any unnecessary inclination thereof can be prevented. In the illustrated example, the projection 9 is arranged to project into only one of the two gaps formed on both sides, in the lengthwise direction of the metallic belt 3, of each of the metallic members 4, 4, ... but the projection 9 could be so arranged as to project into the respective gaps on both sides thereof.

Additionally, the respective groove wall portions 5a, 5a are provided at inner (that is mutually facing) surfaces thereof with engaging grooves 10, 10 disposed laterally on the outer surface of the metallic belt 3. A stop member 11 mounted in each groove 5 is in engagement with the engaging grooves 10, 10 and thereby the respective metallic members 4, 4, ... may be prevented from coming-off the metallic belt 3. The stop member 11 comprises, for example, a W-shaped wire clip which is resilient both in the groove width direction and in the groove opening direction (upper and lower directions in Figure 3) of the groove 5. By this arrangement, the stop members 11 can make easier assembling and disassembling of the belt assembly and generation of chattering noise otherwise caused by free gaps after assembling can be eliminated.

Each stop member 11 is of such a large size as to project forwards and rearwards, in the lengthwise direction of the metallic belt 3, from the groove 5, so that even if any of the respective stop members 11, 11, ... for the respective metallic members 4, 4, ..., is placed out of position at the commencement of assembling thereof, these stop members 11, 11, ... are thereafter brought into abutment with one another as assembling of the whole of the V-belt assembly proceeds, or during power-transmission operation of the assembly. In this manner internal errors in position are automatically corrected, the respective metallic members 4, 4, ... being mutually regulated in position by their respective projections 9, 9, ....

The operation of the whole transmission is as follows:—

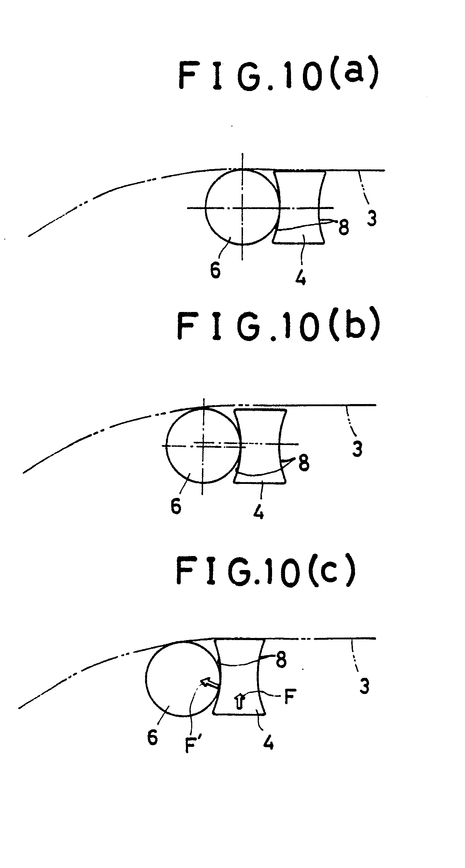

If it be considered that the driving V-pulley 1 is rotating and thereby each V-shaped metallic member 4 in turn is pushed into the V-groove 1a of the V-pulley 1, having moved from a linear movement region of the V-belt assembly 2, the intermediate member 6 which is positioned in front of this metallic member 4 passes from the condition shown in Figure 10(a) into the turning movement region of the V-belt assembly 2 before the metallic member 4 as shown in Figure 10(b) and consequently is displaced inwards radially of the pulley and thereby the following metallic member 4 is pushed inwards by the intermediate member 6 and is also displaced inwards as shown in Figure 10(b). Then when the metallic member 4 is pushed into the V-groove 1a and has a reaction force F applied through its inclined lateral side surfaces 4a, 4a, this member 4 acts to push the intermediate member 6 that is leading it, in the lengthwise direction of the metallic belt 3, by the wedge effect (discussed above) of the receiving surface 8. The member 4 moves outwards while pushing the intermediate member 6 away, and is again brought into pressure contact, at the engaging surface 7 thereof, with the metallic belt 3 as shown in Figure 10(c). As this occurs, the intermediate member 6 is also strongly brought into pressure contact with the metallic belt 3 by a component of a pushing force F' acting thereon by the wedge effect of the metallic member 4. As a result, the reaction force F acts distributively on the metallic belt 3 not only through the metallic member 4 but also through the intermediate member 6, so that stress generated at each individual part of the metallic belt 3 can be decreased, and there is no generation of such a large stress as would be generated by engagement only at the part engaged with the metallic member 4. In this way, the metallic belt 3 as one with the pulley 1 through the respective metallic members 4, 4, . . . and the respective intermediate members 6, 6, . . ., and at the same time can have applied to it a tension force to transmit power to the driven V-pulley.

If, in this case, each of the intermediate members 6, 6, . . . is of such a shape as to be brought into surface contact with the metallic belt 3 as shown in Figure 9, the engaging force thereof can be advantageously further increased.

In the present transmission the reaction force generated when each metallic member is pushed into each of the V-pulleys is applied to the metallic belt in such a condition that this force is distributed to the metallic member and the intermediate member, so that points of acting of the reaction forces on the metallic belt are increased in number, and the stress generated at each part of the metallic belt becomes smaller, and thereby the durability of the metallic belt is improved.

By the feature that the engaging surface of each metallic member is positioned at the same level as the centre, in the height direction, of the inclined lateral side surfaces of each metallic member that are to be in contact with the V-groove of the driven V-pulley, so that the travel speed of the innermost layer belt member of the metallic belt which is in pressure contact with the respective engaging surfaces, and that of the respective metallic members, become equal to each other, and consequently there is no slipping loss caused by a speed difference between the two, not only the useful life of the belt assembly but also the power transmission efficiency can be improved.

By the arrangement that the respective metallic members are mounted, at their outwardly opening grooves, on the metallic belt and are prevented from coming off from the metallic belt by the respective stop members which are resilient in both the groove width direction and in the groove opening upward and downward directions, and which are mounted in the respective grooves, assembling and disassembling of the V-belt assembly is facilitated and the respective stop members are automatically set in position by being brought into mutual abutment one with another during use, even if they are not correctly set in position in the beginning of assembling of the V-belt assembly. Additionally, the respective metallic members are arranged to be mutually regulated in position by the respective projections formed thereon, so that these members may be prevented from being unnecessarily inclined and assembling and operation of the V-belt assembly can be improved.

It will be appreciated that the effects described above specifically with reference to the driving V-pulley occur also at the driven V-pulley.

## Claims

1. A V-belt transmission in which an endless metallic belt (3) is provided thereon with a large number of V-shaped metallic members (4, 4, . . .) disposed in a line in the lengthwise direction of the metallic belt and each having an outwardly directed engaging surface (7) which is in abutment with the metallic belt, the belt and the members forming, as a whole, a V-belt assembly (2) that is applied between a driving V-pulley (1) and a driven V-pulley (—) so as to effect power transmission therebetween, there being a large number of intermediate members (6, 6, . . .) positioned inside the metallic belt interposed each between respective adjacent metallic members; at least one of two receiving surfaces (8, 8) receiving a corresponding intermediate member (6), these receiving surfaces being on mutual opposite side surfaces in the lengthwise direction of the metallic belt (3) of each of the metallic members (4, 4, . . .), being of such a shape as to give a wedge effect for applying a pressing force, in the lengthwise direction of the metallic belt, to said corresponding intermediate member when each of the metallic members is brought into engagement with and pushed outwards by a V-groove (1a, —) of each of the V-pulleys (1, —); characterised in that the engaging surface (7) of each of the metallic members (4, 4, . . .) is positioned at the same level as a centre, in the height direction, of an inclined lateral side surface (4a) of each of the metallic members that is to be in contact with the V-groove (1a, —).

2. A V-belt transmission as claimed in claim 1, wherein each of the metallic members (4, 4, . . .) is provided with a groove (5), which is open outwardly and has at its base the engaging surface (7), so that this member may be mounted, at its groove, on the metallic belt, and is additionally provided with a projection (9) fast therewith that projects into a gap between adjacent ones of the metallic members as formed outside each of the intermediate members (6, 6, . . .).

3. A V-belt transmission as claimed in claim 2, wherein each groove (5) is provided at inner surfaces of groove wall portions (5a, 5a) on both sides thereof with engaging grooves (10, 10) disposed laterally outside an outer surface of the metallic belt (3), and a stop member (11) is mounted in this groove (5) in engagement with the engaging grooves (10, 10), each stop member being resilient both in the groove width direction and in the groove opening direction so that respective stop members may be brought into abutment one with another for being kept in predetermined regular attaching positions.

## Patentansprüche

1. Keilriemenantrieb, bei welchem an einem endlosen Metallband (3) eine große Anzahl V-förmiger Metallglieder (4, 4, . . .) vorgesehen ist, die in einer Reihe in der Längsrichtung des Metallbandes angeordnet sind, und von denen jedes eine auswärts gerichtete Kontaktfläche (7) aufweist, welche an dem Metallband anliegt, wobei das Metallband und die Metallglieder als Ganzes eine Keilriemenanordnung (2) bilden, die zwischen einer antreibenden Keilriemenscheibe (1) und einer angetriebenen Keilriemenscheibe (—) angelegt wird, um eine Kraftübertragung zwischen diesen zu bewirken, wobei eine große Anzahl von Zwischengliedern (6, 6, . . .) innerhalb des Metallbandes angeordnet ist, welche jeweils zwischen entsprechende benachbarte Metallglieder zwischengelegt sind, wobei ferner ein jeweiliges Zwischenglied (6) von wenigstens einer von zwei entsprechenden Aufnahmeflächen (8, 8) aufgenommen wird, die sich an einander gegenüberliegenden Seitenflächen jedes Metallgliedes (4, 4, . . .) in Längsrichtung des Metallbandes (3) befinden und eine solche Gestalt aufweisen, daß sie zur Ausübung einer Druckkraft in Längsrichtung des Metallbandes auf das jeweilige Zwischenglied eine Keilwirkung erteilen, wenn jedes Metallglied mit einer Kerbnut (1a, —) jeder Keilriemenscheibe (1, —) in Kontakt gebracht wird und von der Kerbnut (1a, —) auswärts geschoben wird, dadurch gekennzeichnet, daß die Kontaktfläche (7) jedes Metallgliedes (4, 4, . . .) in Höhenrichtung auf dem gleichen Niveau positioniert ist wie ein Zentrum einer geneigten seitlichen Seitenfläche (4a) jedes Metallgliedes, das mit der Kerbnut (1a, —) in Kontakt stehen soll.

2. Keilriemenantrieb nach Anspruch 1, dadurch gekennzeichnet, daß jedes Metallglied (4, 4, . . .) mit einer Nut (5) versehen ist, welche nach außen offen ist und an ihrer Basis die Kontaktfläche (7) aufweist, so daß dieses Metallglied bei seiner Basis an dem Metallband angebracht werden kann, und ferner mit einem fest daran befindlichen Ansatz (9) versehen ist, welcher in einen Zwischenraum zwischen benachbarten Metallgliedern vorragt, der außerhalb jedes Zwischengliedes (6, 6, . . .) gebildet wird.

3. Keilriemenantrieb nach Anspruch 2, dadurch gekennzeichnet, daß jede Nut (5) bei Innenflächen von Nutwandabschnitten (5a, 5a) auf ihren beiden Seiten mit Eingriffsrillen (10, 10) versehen ist, die seitlich außerhalb einer Außenfläche des Metallbandes (3) angeordnet sind, und daß ein Anschlagglied (11) in dieser Nut (5) in Eingriff mit den Eingriffsrillen (10, 10) angebracht ist, wobei jedes Anschlagglied sowohl in der Breitenrichtung der Nut als auch in der Öffnungsrichtung der Nut nachgiebig ist, so daß jeweilige Anschlagglieder zum Anschlag aneinander gebracht werden können, um in vorbestimmten regelmäßigen Anfügungsstellungen gehalten zu werden.

**Revendications**

1. Transmission par courroie en V dans laquelle une courroie métallique sans fin (3) est munie d'un grand nombre d'éléments métalliques en V (4, 4, . . .) disposés en ligne suivant la longueur de la courroie métallique et présentant chacun une surface de contact dirigée vers l'extérieur (7) qui est en butée contre la courroie métallique, l'ensemble de la courroie et des éléments formant un assemblage de courroie en V (2) qui est appliqué entre une poulie en V menante (1) et une poulie en V menée (—) de façon à assurer la transmission d'énergie entre elles, un grand nombre d'éléments intermédiaires (6, 6, . . .) disposés à l'intérieur de la courroie métallique étant interposés chacun entre des éléments métalliques voisins respectifs; l'une au moins de deux surfaces réceptrices (8, 8) recevant un élément intermédiaire correspondant (6), ces surfaces réceptrices étant situées sur des surfaces latérales opposées l'une à l'autre suivant la longueur de la courroie métallique (3) de chacun des éléments métalliques (4, 4, . . .), étant de forme voulue pour exercer un effet de coin afin d'appliquer une force de pression, suivant la longueur de la courroie métallique, audit élément intermédiaire correspondant quand chacun des éléments métalliques est amené en contact avec, et poussé vers l'extérieur par une gorge en V (1a, —) de chacune des poulies en V (1, —); caractérisé en ce que la surface de contact (7) de chacun des éléments métalliques (4, 4, . . .) est placée au même niveau que le milieu, dans le sens de la hauteur, d'une surface latérale inclinée (4a) de chacun des éléments métalliques devant entrer en contact avec la gorge en V (1a, —).

2. Transmission à courroie en V selon la revendication 1, dans laquelle chacun des éléments métalliques (4, 4, . . .) présente une gorge (5), qui est ouverte vers l'extérieur et présente à sa base la surface de contact (7), de sorte que cet élément peut être monté, par sa gorge, sur la courroie métallique, et présente en outre une protubérance (9) qui en est solidaire faisant saillie dans une brèche séparant des éléments métalliques voisins ménagée à l'extérieur de chacun des éléments métalliques (6, 6, . . .).

3. Transmission à courroie en V selon la revendication 2, dans laquelle chaque gorge (5) présente au niveau de surfaces intérieures de parties de paroi de gorge (5a, 5a) situées sur ses deux côtés des gorges de contact (10, 10) disposées latéralement à l'extérieur d'une surface extérieure de la courroie métallique (3), et un élément de butée (11) est monté dans cette gorge (5) en contact avec les gorges de contact (10, 10), chaque élément de butée étant élastique tant suivant la largeur de la gorge que suivant la direction d'ouverture de la gorge de sorte que des éléments de butée respectifs peuvent être aboutés l'un avec l'autre pour se trouver maintenus dans des positions de fixation normales prédéterminées.

# FIG.1

# FIG.2

# FIG.3

## FIG.4

## FIG.5

## FIG.6

## FIG.7

## FIG.8

## FIG.9

# FIG.10(a)

# FIG.10(b)

# FIG.10(c)